# EUROPÄISCHE PATENTSCHRIFT

(11) **EP 2 464 880 B1**
(45) Veröffentlichungstag und Bekanntmachung des Hinweises auf die Patenterteilung: **11.06.2014**
(21) Anmeldenummer: 10740668.8
(22) Anmeldetag: 10.08.2010
(51) Int. Cl.: F16C 19/52, F16C 33/66, H01R 39/64, H02K 7/08, H02K 7/11, H02K 11/00, C10M 173/02

(54) **ELEKTRISCHE MASCHINE MIT VOR STROMDURCHSCHLÄGEN GESCHÜTZTEM WÄLZLAGER UND GETRIEBEMOTOR MIT EINEM SOLCHEN**
ELECTRICAL MACHINE WITH ROLLING ELEMENT BEARING BEING PROTECTED AGAINST ELECTRIC ARC AND GEARED MOTOR WITH SUCH A BEARING
MACHINE ELECTRIQUE AVEC PALIER À ROULEMENT ÊTRE PROTECTÉ D'ARC ÉLECTRIQUE ET ELECTROREDUCTEUR AVEC CE PALIER

(30) Priorität: 10.08.2009 DE 102009036856
(43) Veröffentlichungstag der Anmeldung: 20.06.2012
(73) Patentinhaber: MAGNA STEYR Fahrzeugtechnik AG & Co KG, 8041 Graz (AT)
(72) Erfinder: MAYR, Franz, A-8323 St. Marein Bei Graz (AT); TANGL, Ferdinand, A-8075 Hart Bei Graz (AT)
(74) Vertreter: Rausch, Gabriele
(86) Internationale Anmeldenummer: PCT/EP2010/061586
(87) Internationale Veröffentlichungsnummer: WO 2011/018447

(56) Entgegenhaltungen:
- US-A- 4 604 229
- US-A- 4 797 013
- US-A- 5 303 800
- US-A1- 2005 078 897
- US-A1- 2009 123 100
- US-B1- 7 019 431

## Beschreibung

Die Erfindung betrifft elektrische Maschinen aller Art und jeglicher Anwendung, deren Rotor in Wälzlagern gelagert ist. Wälzlager bestehen aus einem Innenring, einem Außenring, den Wälzkörpern und gegebenenfalls einem Käfig. Ein Ring des Wälzlagers (meist der Innenring) ist mit dem Rotor der elektrischen Maschine verbunden, der jeweils andere Ring (meist der Außenring) sitzt im Gehäuse der elektrischen Maschine.

Bei Elektromotoren entsteht durch unsymmetrische Feldverteilung ein Zirkularstrom, der in der Welle des Rotors eine kleine Spannung induziert. Bei Asynchronmotoren tritt bei gewissen Betriebsbedingungen ein Stromfluss zwischen Stator und Rotor auf. Weiters können auch kapazitive Entladungsströme zwischen dem Rotor und dem Stator auftreten, die etwa im Zusammenhang mit einem Umrichterbetrieb stehen.

In jedem Fall wird der Stromkreis über die Wälzlager der Rotorlagerung geschlossen. Der Stromfluss verursacht eine Beschädigung der Wälzlager, welche in der Regel mit Öl oder Fett für ihre Lebensdauer geschmiert sind. Dabei muss der Strom zwischen Innenring und Außenring durch die Wälzkörper fließen und hat dabei zwei Schmierfilme (den zwischen dem Wälzkörper und einerseits dem Innenring und andererseits dem Außenring) zu überwinden. Weil die Schmierfilme eine Isolierschicht bilden, ist der Stromfluss nicht kontinuierlich, sondern er besteht in stochastisch auftretenden Durchschlägen des Schmierfilms. Dabei können kurzzeitig Stromstärken von mehreren Ampere auftreten.

Dieses Durchschlagen verursacht Beschädigungen des Wälzlagers, vor allem der Laufbahnen von Innen- und Außenring. Auf den Laufbahnen entstehen Mikrokrater und Querriffelungen, die zu Vibrationen und Geräusch, und schließlich zum Ausfall des Wälzlagers führen.

### Stand der Technik

Zum Schutz der Lager vor dem beschriebenen Phänomen gibt es im Wesentlichen zwei Wege: Entweder das Wälzlager wird isoliert oder es wird eine elektrisch leitende Brücke zwischen Innen- und Außenring angebracht. Der erste Weg ist beispielsweise in der DE 100 37 423 A1 oder der DE 41 00 587 C2 beschritten, der zweite in der EP 892 471 B1.

In der DE 100 37 423 A1 ist ein Isolierring zwischen dem Außenring und dem Gehäuse, was den Sitz des Lagerringes beeinträchtigt und den Einbau erschwert. Die schleifende metallische Brücke der EP 892 471 B1 berührt den jeweils anderen Lagerring nur punkt- und bestenfalls linienförmig, sodass sie nur sehr kleine Stromstärken übertragen kann, nicht aber Stromstärken von mehreren Ampère. Außerdem sind die Brücken anfällig für Verschleiß und daher auf die Dauer nicht zuverlässig. In der EP 892 471 B1 enthält das Wälzlager zusätzlich zu der metallischen Brücke noch ein Fett, das durch Beimengung elektrisch leitender Feststoffpartikel leitend ist. Dass das Fett zusätzlich zur Brücke angewendet wird, zeigt, dass weder die Brücke noch das Fett alleine zur Herstellung einer zuverlässigen leitenden Verbindung ausreichen.

Einen weiteren Stand der Technik bildet die US 4,797,013 A, von der im Oberbegriff des Anspruchs 1 ausgegangen wird, und die eine elektrische Maschine mit elektrisch leitfähigen Lagern aufweist, die von elektrisch leitfähiger Flüssigkeit geschmiert werden.

### Problem/Lösung

Es ist somit die der Erfindung zugrunde liegende Aufgabe, Wälzlager einer elektrischen Maschine mit minimalem Aufwand zuverlässig vor elektrischen Durchschlägen zu schützen und die dadurch verursachten Beschädigungen hintan zu halten.

Erfindungsgemäß wird das dadurch erreicht, dass das Wälzlager mit einer Flüssigkeit auf wässriger Basis geschmiert ist, die kraft ihrer Leitfähigkeit den Spannungsausgleich zwischen Innenring und Außenring ermöglicht. Die Flüssigkeit auf wässriger Basis hat neben ihrer elektrischen Leitfähigkeit für die Schmierung eines Wälzlagers ideale Eigenschaften: geringe und nur wenig temperaturabhängige Viskosität, hohe Wärmekapazität für gute Kühlung, Umweltverträglichkeit, und niedere Kosten (Wasser kostet nichts).

Die Wälzlager zwischen Rotor und Gehäuse sitzen jeweils in einem abgeschlossenen Raum, wobei der Raum die Flüssigkeit auf wässriger Basis enthält. Deren Spiegel überragt die Innenkontur des Außenringes an seiner tiefsten Stelle, sodass die passierenden Wälzkörper benetzt werden. Im Idealfall beziehungsweise bei Stillstand würde der Spiegel bis zur Außenkontur des Innenringes reichen, im Betrieb wird die Flüssigkeit jedoch von den Wälzkörpern abgedrängt. Der Raum ist zumindest einseitig von einem Dichtring abgeschlossen.

Wenn die elektrische Maschine Teil eines Getriebemotors ist, wobei das Gehäuse des Elektromotors und das Gehäuse des Getriebes miteinander verbunden sind und die Rotorwelle des Elektromotors oder ein mit ihr verbundener Teil in das Getriebe ragt und in einem der beiden Gehäuse gelagert ist, ergibt sich eine besonders vorteilhafte Ausführungsform. In dieser wird das Getriebe mit einem Schmiermittel auf Basis von Wasser betrieben. Dabei gelangt das Schmiermittel auf wässriger Basis auch an das in einem der beiden Gehäuse angeordnete Wälzlager.

Das wässrige Schmiermittel enthält vorzugsweise, nicht zuletzt auch unter Bedachtnahme auf die Eingriffszonen der im Getriebe rotierenden Zahnräder, dispergierte Teilchen eines metallischen Feststoff - Schmiermittels, vorzugsweise von Graphit in einem Bereich von 0,1 bis 20 %, abhängig von der Größe der Lager beziehungsweise des Getriebes und deren Toleranzen, und der Teilchengröße des Feststoff - Schmiermittels. Bei bestimmten konstruktiven Gegebenheiten ist es von Vorteil, den Anteil des Feststoff - Schmiermittels zu reduzieren, in extremen Fällen kann die dadurch verminderte Leitfähigkeit durch erhöhte Zugabe eines Ionisierungsmittels (zum Beispiel Amine oder schwache Säuren) kompensiert werden. Das Feststoff - Schmiermittel wird durch die Rührwirkung der Zahnräder dispergiert gehalten. Weil die Lager aber naturgemäß in einem relativ toten Raum abseits der Zahnräder im Gehäuse sind, wird von dem dispergierten Feststoff - Schmiermittel weniger zu dem Wälzlager gelangen. Das kommt der Lebensdauer des Wälzlagers zugute.

Die Schmierflüssigkeit kann in Weiterbildung der Erfindung verschiedene weitere Beimengungen enthalten: Ein Ionisierungsmittel (vorzugsweise ein Amin oder eine schwache Säure), um die Leitfähigkeit der wässrigen Flüssigkeit zu erhöhen, wenn die Leitfähigkeit des Feststoff-Schmiermittels dazu nicht ausreicht; ein Korrosionsschutzmittel (vorzugsweise eine Verbindung der Borsäure, und/oder ein Diäthanolamin und/oder einen Phosphorsäureester) zum Schutz und auch um eventuelle Ionisierungseffekte zu kompensieren oder zu verstärken; ein Frostschutzmittel (vorzugsweise ein Glykol) bei Betrieb im Freien; ein Tensid (vorzugsweise Acetylenglykol, das auch den Korrosionsschutz verbessert) zur Verbesserung der Benetzungsfähigkeit; und schließlich ein Dispergiermittel, um Entmischung hintan zu halten.

### Figuren

- Fig. 1:: Das Lager einer erfindungsgemäßen elektrischen Maschine.
- Fig. 2:: Einen erfindungsgemäßen Getriebemotor.

### Beschreibung

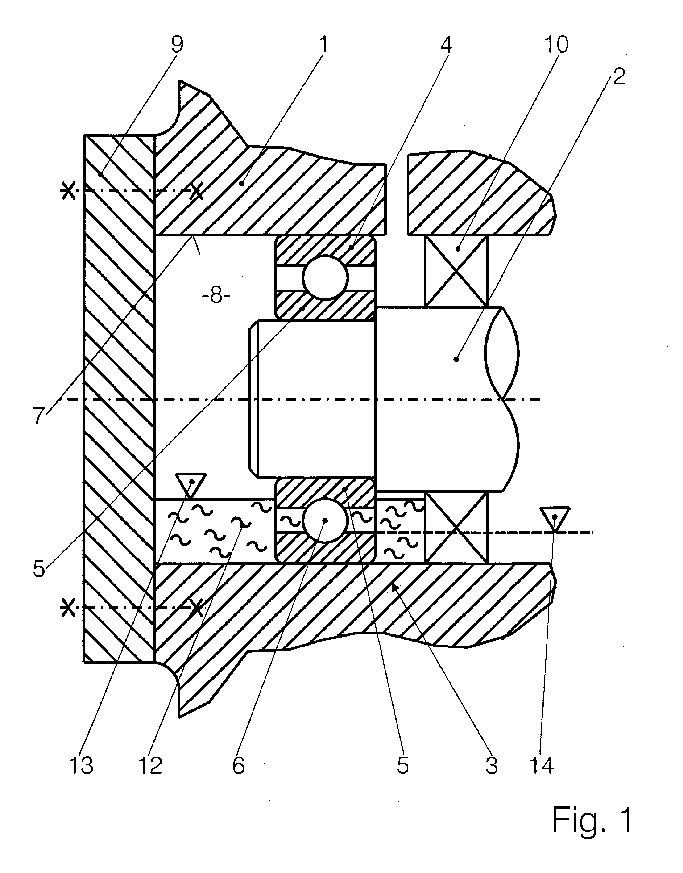

In **Fig. 1** ist von dem Gehäuse 1 einer elektrischen Maschine nur der ein Wälzlager 3 für die Rotorwelle 2 enthaltende Teil zu sehen. Das Wälzlager 3 besteht aus einem in einer Bohrung 7 des Gehäuses sitzenden Außenring 4, einem auf die Rotorwelle 2 aufgepressten Innenring 5 und den Wälzkörpern 6. Das Wälzlager 3 befindet sich in einem Raum 8, der einerseits von einem Lagerdeckel 9 und andererseits von einem Dichtring 10 begrenzt ist. In dem Raum 8 ist als Schmiermittel eine Flüssigkeit 12 auf Basis von Wasser mit einem Flüssigkeitsspiegel 13. Dieser ist gerade etwas höher als die tiefste Stelle 14 der Innenwand des Außenringes 4. Die Flüssigkeit 12 auf Basis von Wasser ist elektrisch leitend, sie benetzt an der tiefsten Stelle die Innenfläche des Außenringes und somit auch die passierenden Wälzkörper, die somit alle benetzt sind und die leitende Verbindung zum Innenring herstellen. Der Flüssigkeitsspiegel kann auch höher sein, dann wird die Flüssigkeit von den passierenden Wälzkörpern abgedrängt. Auf diese Weise kann zwischen dem Gehäuse 1 und der Rotorwelle 2 ein erheblicher elektrischer Strom fließen, weil die kritische Übertragung zwischen Innen- und Außenring über einen Großteil der Wälzkörper 6 gleichzeitig erfolgt.

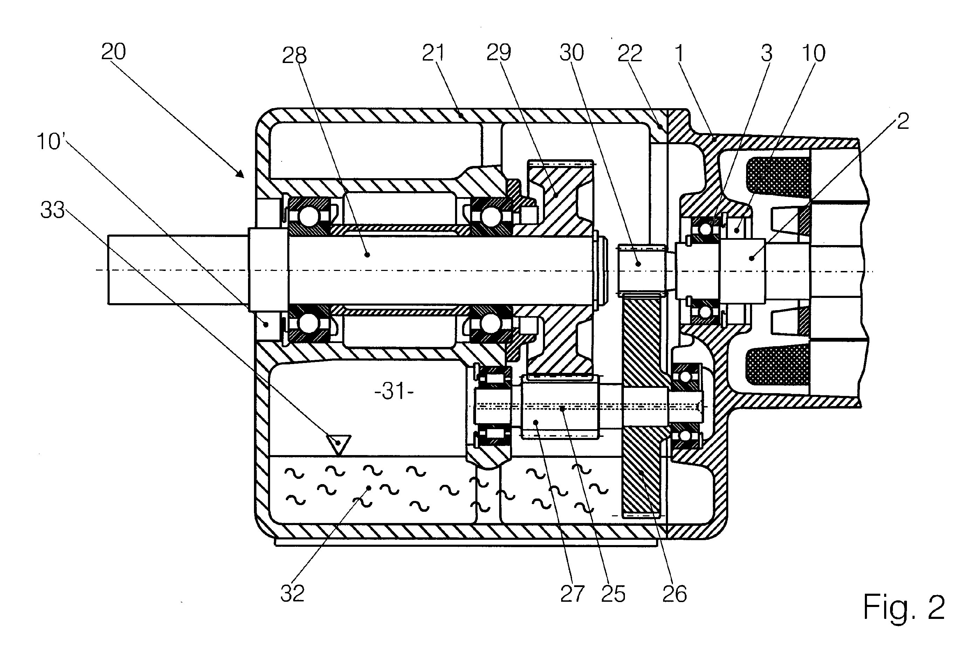

In **Fig. 2** haben gleiche Teile dieselben Bezugszeichen wie in Fig. 1. Hier aber ist die elektrische Maschine 1 mit einem Getriebe 20 verbunden. Das Gehäuse 21 des Getriebes 20 ist über einen Flansch 22 mit dem das Wälzlager 3 enthaltenden Teil des Gehäuses 1 der elektrischen Maschine dicht verbunden. Das Getriebegehäuse enthält, ohne auf die üblichen Details einzugehen, eine Vorgelegewelle 25 mit Zahnrädern 26, 27 und eine Ausgangswelle 28 mit einem Zahnrad 29. Als Eingangswelle dient die Rotorwelle 2 der elektrischen Maschine. Ihr im Bild sichtbares Ende ist in dem Wälzlager 3 gelagert, ragt darüber hinaus und endet in dem fliegend angeordneten Ritzel 30. Das Wälzlager 3 ist vom Inneren der elektrischen Maschine durch einen Dichtring 10 getrennt, aber zum Innenraum 31 des Getriebes 20 hin offen.

Das Getriebe 20 hat einen Schmiermittelsumpf 32, gebildet von einer Flüssigkeit auf wässriger Basis. Der Flüssigkeitsspiegel 33 ist hier gerade so hoch, dass das Zahnrad 26 eintaucht und die Flüssigkeit in den Raum 31 schleudert. Es könnte im Rahmen der Erfindung aber ebenso eine Druckumlaufschmierung vorgesehen sein. Jedenfalls gelangt auch Flüssigkeit zum Wälzlager 3, obwohl es nicht im Schleuderbereich des Zahnrades 26 liegt. Die Flüssigkeit auf wässriger Basis stellt die leitende Verbindung zwischen dem Rotor 2 und dem Gehäuse 1 her, es könnte bei anderer Anordnung des Flansches 21 auch das Getriebegehäuse 21 sein.

Die Flüssigkeit auf wässriger Basis enthält ein Feststoff-Schmiermittel. Ein solches könnte Zinn oder eine geeignete Molybdän-Verbindung sein. Im vorliegenden Fall ist es flockiger Graphit mit einer Korngröße unter 20 Mikrometer in einem Mischungsverhältnis zwischen 0,1 und 20 % Gewicht, unter bestimmten Bedingungen (siehe weiter oben) besser unter 10 %, noch besser unter 5 %.

Die Flüssigkeit auf wässriger Basis kann sowohl für die Anwendung nach Fig. 1 als auch für die nach Fig. 2 noch weitere Zusätze enthalten. Als Korrosionsschutzmittel kommt ein Borsäurederivat oder ein Karbonsäuresalz von Aluminium, Zink oder Kalzium in Frage. Für den Einsatz im Freien ist eines der bekannten Frostschutzmittel beizumischen. Als Tensid kann ein Azetylenderivat eingesetzt werden.

Insgesamt ist durch den großflächigen leitenden Kontakt im Wälzlager jegliche Gefahr einer Beschädigung des Wälzlagers durch Durchschläge oder hohe Stromstärken gebannt. Bei der Anwendung in einem Getriebemotor kommen dazu noch die Vorteile, die die gemeinsame Schmierung mit der wässrigen Flüssigkeit auch für das Getriebe hat: Hohe Wärmekapazität, stabile Viskosität, niedere Kosten und Umweltfreundlichkeit.

## Patentansprüche

1. Elektrische Maschine mit einem Wälzlager (3), welches aus einem Innenring (5), einem Außenring (4) und Wälzkörpern (6) besteht und das Wälzlager mit einer Flüssigkeit (12) auf wässriger Basis geschmiert ist, die kraft ihrer elektrischen Leitfähigkeit den Spannungsausgleich zwischen Innenring (5) und Außenring (4) ermöglicht, wobei der Innenring (5) des Wälzlagers (3) auf der Rotorwelle (2) der elektrischen Maschine sitzt und dessen Außenring (4) in einem Gehäuse (1) sitzt **dadurch gekennzeichnet, dass** das Wälzlager (3) sich in einem abgeschlossenen Raum (8) befindet, wobei der Raum (8) die Flüssigkeit auf wässriger Basis enthält und deren Spiegel (13) die Innenkontur des Außenringes (4) an seiner tiefsten Stelle (14) überragt.

2. Elektrische Maschine nach Anspruch 1, **dadurch gekennzeichnet, dass** die Flüssigkeit auf wässriger Basis ein metallisches Feststoff-Schmiermittel enthält.

3. Elektrische Maschine nach Anspruch 1, **dadurch gekennzeichnet, dass** das Feststoffschmiermittel Graphit ist und dessen Gewichtsanteil an der Flüssigkeit auf wässriger Basis 0,1 bis 20 % beträgt.

4. Elektrische Maschine nach Anspruch 3, **dadurch gekennzeichnet, dass** der Gewichtsanteil des Feststoffschmiermittels an der Flüssigkeit auf wässriger Basis weniger als 10 %, vorzugsweise weniger als 5 % beträgt.

5. Elektrische Maschine nach Anspruch 1, **dadurch gekennzeichnet, dass** die Flüssigkeit auf wässriger Basis ein Ionisierungsmittel enthält.

6. Elektrische Maschine nach Anspruch 1, **dadurch gekennzeichnet, dass** die Flüssigkeit auf wässriger Basis ein Korrosionsschutzmittel enthält.

7. Elektrische Maschine nach Anspruch 1, **dadurch gekennzeichnet, dass** die Flüssigkeit auf wässriger Basis ein Frostschutzmittel enthält.

8. Elektrische Maschine nach Anspruch 1, **dadurch gekennzeichnet, dass** die Flüssigkeit auf wässriger Basis ein Tensid enthält.

9. Elektrische Maschine nach Anspruch 1, **dadurch gekennzeichnet, dass** die Flüssigkeit auf wässriger Basis ein Dispergiermittel enthält.

10. Elektrischer Getriebemotor, bestehend aus einer elektrischen Maschine nach Anspruch 1 und einem Getriebe (20), wobei das Gehäuse (1) des Elektromotors und das Gehäuse (21) des Getriebes (20) miteinander verbunden sind und die Rotorwelle(2) des Elektromotors oder ein mit ihr verbundener Teil in das Getriebe (20) ragt und in einem der beiden Gehäuse (1;21) gelagert ist, **dadurch gekennzeichnet, dass** das Getriebe (20) ein Schmiermittel auf Basis von Wasser enthält.

## Claims

1. Electrical machine having a roller bearing (3) which consists of an inner ring (5), an outer ring (4) and roller bodies (6) and the roller bearing is lubricated with a liquid (12) on an aqueous basis which, because of its electrical conductivity, allows voltage equalization between the inner ring (5) and the outer ring (4), with the inner ring (5) of the roller bearing (3) being seated on the rotor shaft (2) of the electrical machine and with its outer ring (4) being seated in a housing (1), **characterized in that** the roller bearing (3) is located in a closed area (8), with the area (8) containing the liquid on an aqueous basis, and its level (13) overhanging the internal contour of the outer ring (4) at its lowest point (14).

2. Electrical machine according to Claim 1, **characterized in that** the liquid on an aqueous basis contains a metallic solid lubricant.

3. Electrical machine according to Claim 1, **characterized in that** the solid lubricant is graphite and its proportion by weight in the liquid on an aqueous basis is 0.1 to 20%.

4. Electrical machine according to Claim 3, **characterized in that** the proportion by weight of the solid lubricant in the liquid on an aqueous basis is less than 10%, preferably less than 5%.

5. Electrical machine according to Claim 1, **characterized in that** the liquid on an aqueous basis contains an ionization means.

6. Electrical machine according to Claim 1, **characterized in that** the liquid on an aqueous basis contains a corrosion protection means.

7. Electrical machine according to Claim 1, **characterized in that** the liquid on an aqueous basis contains an antifreeze.

8. Electrical machine according to Claim 1, **characterized in that** the liquid on an aqueous basis contains a surfactant.

9. Electrical machine according to Claim 1, **characterized in that** the liquid on an aqueous basis contains a dispersant.

10. Electrical geared motor, consisting of an electrical machine according to Claim 1 and a gearbox (20), with the housing (1) of the electric motor and the housing (21) of the gearbox (20) being connected to one another, and with the rotor shaft (2) of the electric motor, or a part connected to it, projecting into the gearbox (20) and being mounted in one of the two housings (1; 21), **characterized in that** the gearbox (20) contains a lubricant based on water.

## Revendications

1. Machine électrique comprenant un palier à roulement (3), lequel est constitué d'une bague intérieure (5), d'une bague extérieure (4) et de corps de roulement (6), et le palier à roulement étant lubrifié par un liquide (12) à base aqueuse qui, en raison de sa conductibilité électrique, permet l'égalisation de tension entre la bague intérieure (5) et la bague extérieure (4), la bague intérieure (5) du palier à roulement (3) reposant sur l'arbre de rotor (2) de la machine électrique, et sa bague extérieure (4) reposant dans un boîtier (1), **caractérisée en ce que** le palier à roulement (3) se trouve dans un espace fermé (8), l'espace (8) contenant le liquide à base aqueuse et son niveau (13) dépassant au-delà du contour intérieur de la bague extérieure (4) à son point le plus bas (14).

2. Machine électrique selon la revendication 1, **caractérisée en ce que** le liquide à base aqueuse contient un lubrifiant solide métallique.

3. Machine électrique selon la revendication 1, **caractérisée en ce que** le lubrifiant solide est du graphite et sa proportion en poids du liquide à base aqueuse vaut de 0,1 à 20 %.

4. Machine électrique selon la revendication 3, **caractérisée en ce que** la proportion en poids du liquide à base aqueuse dans le lubrifiant solide vaut moins de 10 %, de préférence moins de 5 %.

5. Machine électrique selon la revendication 1, **caractérisée en ce que** le liquide à base aqueuse contient un agent ionisant.

6. Machine électrique selon la revendication 1, **caractérisée en ce que** le liquide à base aqueuse contient un agent anticorrosif.

7. Machine électrique selon la revendication 1, **caractérisée en ce que** le liquide à base aqueuse contient un agent antigel.

8. Machine électrique selon la revendication 1, **caractérisée en ce que** le liquide à base aqueuse contient un tensioactif.

9. Machine électrique selon la revendication 1, **caractérisée en ce que** le liquide à base aqueuse contient un agent dispersant.

10. Motoréducteur électrique, constitué d'une machine électrique selon la revendication 1 et d'une transmission (20), le boîtier (1) du moteur électrique et le boîtier (21) de la transmission (20) étant reliés l'un à l'autre et l'arbre de rotor (2) du moteur électrique ou une partie reliée à celui-ci faisant saillie dans la transmission (20) et étant monté(e) dans l'un des deux boîtiers (1 ; 21), **caractérisé en ce que** la transmission (20) contient un lubrifiant à base d'eau.
